(19) Europäisches Patentamt
European Patent Office
Office européen des brevets

(11) EP 0 422 576 B1

(12) # EUROPÄISCHE PATENTSCHRIFT

(45) Veröffentlichungstag und Bekanntmachung des Hinweises auf die Patenterteilung:
**17.04.1996 Patentblatt 1996/16**

(51) Int Cl.⁶: **C08L 79/04**, C08L 39/06

(21) Anmeldenummer: **90119317.7**

(22) Anmeldetag: **09.10.1990**

(54) **Legierungen mit einer Glastemperatur**

Alloys with a glass transition temperature

Alliages ayant une température de transition vitreuse

(84) Benannte Vertragsstaaten:
**DE ES FR GB IT NL**

(30) Priorität: **12.10.1989 DE 3934026**

(43) Veröffentlichungstag der Anmeldung:
**17.04.1991 Patentblatt 1991/16**

(73) Patentinhaber: **HOECHST AKTIENGESELLSCHAFT**
**D-65926 Frankfurt am Main (DE)**

(72) Erfinder:
- **Haubs, Michael, Dr.**
  **W-6550 Bad Kreuznach (DE)**
- **Herrmann-Schönherr, Otto, Dr.**
  **W-6140 Bensheim (DE)**
- **Cherdron, Harald, Prof. Dr.**
  **W-6200 Wiesbaden (DE)**

(56) Entgegenhaltungen:
**EP-A- 388 803**
**EP-A- 401 740**
**US-A- 2 958 677**
**US-A- 3 036 988**
**US-A- 3 211 807**

- **Keine einschlägigen Dokumente gefunden**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Legierungen mit einer Glastemperatur, aus einem Homo- oder Copolybenzimidazol und Poly-N-vinylpyrrolidon bestehend, Verfahren zu ihrer Herstellung und ihre Verwendung.

Es ist bekannt, Polymere zu legieren, um neue Werkstoffe herzustellen, wie sie auf andere Art und Weise, beispielsweise durch Copolymerisation, nicht oder nur schwierig realisierbar sind. Insbesondere können auf diese Weise technologisch wichtige Eigenschaften verbessert oder gezielt eingestellt und die Wirtschaftlichkeit erhöht werden.

Es ist auch bekannt, daß die überwiegende Mehrheit von Paaren von Polymeren nach dem Mischen zweiphasige Blends bilden und daß diese Mischungen durch Opazität, unterschiedliche thermische Übergänge (z.B. Glasübergänge) und schlechte mechanische Eigenschaften charakterisiert sind (vgl. Olabisi, Robeson, Shaw: Polymer - Polymer Miscibility, Academic Press, New York, S. 7, 1979).

Die Eigenschaften einer Legierung lassen sich aber aus den Eigenschaften der Einzelkomponenten nicht gesichert vorhersagen. Daher bleibt das Legieren von Polymeren weitgehend empirisch. Insbesondere ist die homogene Mischbarkeit von Legierungen, speziell solche aus stark wechselwirkenden Polymeren, trotz einer sehr großen Zahl von experimentellen und theoretischen Arbeiten auf diesem Gebiet, nicht vorhersagbar. So ist bekannt, daß homogen mischbare Legierungen aus Polymeren selten sind (vgl. Journal of Polymer Science, Polymer Physics Edition, 21, 11 (1983)).

Ein eindeutiges Kriterium für homogene Mischbarkeit ist das Auftreten einer einzigen Glastemperatur, die zwischen den Glastemperaturen der zur Herstellung der Mischung verwendeten Komponenten liegt. Die Transparenz von Folien von Polymerlegierungen ist ein Indiz, daß die Komponenten homogen gemischt vorliegen. Im folgenden soll daher unter homogen gemischten Legierungen solche verstanden werden, die eine einzige Glastemperatur aufweisen.

In der Technik besteht großes Interesse an homogen gemischten Polymerlegierungen, da ihre Eigenschaften durch Variation der Komponenten und der Mischungsverhältnisse bestimmten Anforderungen gezielt angepaßt werden können. Polybenzimidazole sind aufgrund ihrer außergewöhnlichen thermischen und mechanischen Eigenschaften als Legierungsbestandteil besonders interessant.

Für bestimmte Anwendungen, z.B. zur Verbesserung der Verarbeitbarkeit, ist eine Erniedrigung der Glastemperatur wünschenswert. Auch die gezielte Anpassung von mechanischen Eigenschaften wird in der Praxis verlangt. Schließlich ist das Erreichen einer bestimmten Wasseraufnahmefähigkeit für viele Anwendungen von Bedeutung. Erwähnt seien der Tragekomfort von Geweben aus Fasern sowie die Hydrophilie und damit die Foulingresistenz von semipermeablen Membranen.

Es bestand somit die Aufgabe, homogen gemischte Polybenzimidazollegierungen, d.h. Legierungen mit einer einzigen Glastemperatur, bereitzustellen.

Es wurde nun gefunden, daß Legierungen aus Polybenzimidazolen mit Poly-N-vinylpyrrolidon eine einzige Glastemperaturen aufweisen.

Die Erfindung betrifft eine Legierung mit einer einzigen Glastemperatur aus

a) mindestens einem Homo- oder Copolybenzimidazol und

b) Poly-H-vinylpyrrolidon bestehend.

Die Erfindung betrifft weiterhin ein Verfahren zur Herstellung einer Legierung mit einer einzigen Glastemperatur, dadurch gekennzeichnet, daß Poly-H-vinylpyrrolidon, gelöst oder in Substanz, einer Lösung eines Polybenzimidazols zugesetzt und anschließend das Lösemittel entfernt wird.

Außerdem betrifft die Erfindung ein Verfahren zur Herstellung einer Legierung mit einer einzigen Glastemperatur, dadurch gekennzeichnet, daß das Polybenzimidazol in Gegenwart von Poly-N-vinylpyrrolidon synthetisiert wird.

Die Erfindung betrifft ebenso die Verwendung einer Legierung zur Herstellung von Formkörpern, Folien, Membranen, Beschichtungen oder Fasern.

Die Polybenzimidazole bestehen aus Wiederholeinheiten der Formel (I)

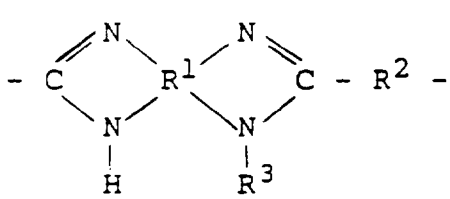

(I),

worin $R^1$ ein vierwertiger aromatischer Ring ist, wobei die Stickstoffatome, die die Benzimidazolringe bilden, paarweise über benachbarte C-Atome des aromatischen Ringes miteinander verbunden sind, $R^2$ ein aromatischer oder heterocyclischer Ring, beispielsweise Pyrazylen, Furylen, Chinolindiyl, Thiophendiyl, Pyrylen und Pyridindiyl und $R^3$ -H, Phenyl

oder $-CH_2CH_2OH$ bedeuten.

$R^1$ ist vorzugsweise

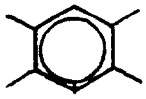

(III),

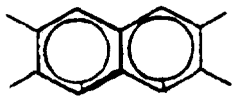

(IV),

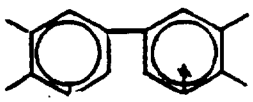

(V)

oder

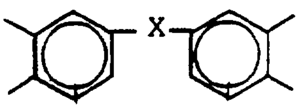

(VI)

worin

-X- -O-, -S-, $-SO_2-$, $-CH_2-$, $-C(CH_3)_2-$, $-C(CF_3)_2-$ oder $-C_2H_2-$,

$R^2$ ist vorzugsweise

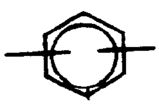

(VII),

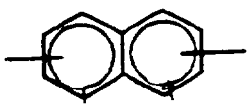

(VIII),

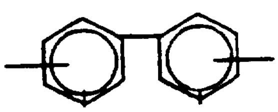

(IX)

oder

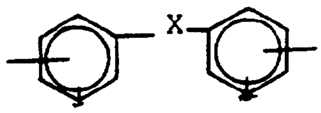

(X),

worin

-X- -O-, -S-, $-SO_2-$, $-CH_2-$, $-C(CH_3)_2-$, $-C(CF_3)_2-$ oder $-C_2H_2-$

Das Polybenzimidazol kann auch aus Wiederholeinheiten der Formel (II)

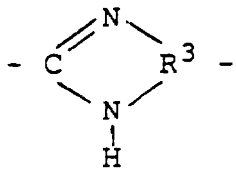

(II)

bestehen, worin $R^3$ ein aromatischer Rest ist, wobei die Stickstoffatome, die den Benzimidazolring bilden, paarweise über benachbarte C-Atome des aromatischen Rests miteinander verbunden sind.

Insbesondere werden folgende Polybenzimidazole verwendet:

Poly-2,2'-(m-phenylen)-5,5'-bibenzimidazol,
Poly-2,2'-(pyridylen-3",5")-5,5'-bibenzimidazol,
Poly-2,2'-(furylen-2",5")-5,5'-bibenzimidazol,
Poly-2,2'-(naphthalin-1",6")-5,5'-bibenzimidazol,
Poly-2,2'-(biphenylen-4',4"')-5,5'-bibenzimidazol,
Poly-2,2'-amylen-5,5'-bibenzimidazol,
Poly-2,2'-octamethylen-5,5'-bibenzimidazol,
Poly-2,6-(m-phenylen)-diimidazobenzol,
Poly-2,2'-cyclohexenyl-5,5'-bibenzimidazol,
Poly-2,2'-(m-phenylen)-5,5'-di(benzimidazol)ether,
Poly-2,2'-(m-phenylen)-5,5'-di(benzimidazol)sulfid,
Poly-2,2'-(m-phenylen)-5,5'-di(benzimidazol)sulfon,
Poly-2,2'-(m-phenylen)-5,5'-di(benzimidazol)methan,
Poly-2,2"-(m-phenylen)-5,5"-di(benzimidazol)propan-2,2 und
Poly-2,2"-(m-phenylen)-5,5"-di(benzimidazol)ethylen-1,2.

Neben den Polybenzimidazolen, wie sie hier beschrieben sind, eignen sich auch Copolymere, Terpolymere und insbesondere Blockcopolymere zur Herstellung von Legierungen mit einer Glastemperatur.

Die Polybenzimidazole weisen Staudingerindizes von 0,2 bis 2,5 dl/g auf, gemessen in N-Methyl-2-pyrrolidon bei 25°C, vorzugsweise von 0,3 bis 2 und insbesondere von 0,4 bis 1,5 dl/g.

Das Molekulargewicht von Poly-H-vinylpyrrolidon (PVP), angegeben als Gewichtsmittel, liegt im Bereich von 1000 bis 3 Millionen, vorzugsweise von 20.000 bis 200.000.

PVP wird in Mengen von 1 bis 99 Gew.-%, vorzugsweise von 10 bis 90 Gew.-%, insbesondere von 15 bis 50 Gew.-%, bezogen auf die Summe der Komponenten, verwendet.

Zur weiteren Verbesserung der Eigenschaften können die Legierungen Additive, wie thermische Stabilisatoren, UV-Stabilisatoren oder verstärkende Zusätze wie Glas-, Kohle- oder Hochmodulfasern enthalten.

Die Legierungen können zur Herstellung von Formkörpern, Fasern, Membranen, Beschichtungen oder Folien eingesetzt werden.

Die erfindungsgemäßen Legierungen können in üblicher Weise hergestellt werden, indem PVP, gelöst oder als Substanz, einer Lösung mindestens eines Polybenzimidazols zugesetzt wird. Bei dem Lösemittel handelt es sich beispielsweise um ein aprotisches organisches Lösemittel wie Dimethylformamid, Dimethylsulfoxid, N-Methyl-2-pyrrolidon oder N,N-Dimethylacetamid, oder um ein Gemisch dieser Lösemittel.

Das Polybenzimidazol kann auch in Gegenwart von Poly-N-vinylpyrrolidon synthetisiert werden.

Zur Verbesserung der Löslichkeit der Polybenzimidazole können Salze wie LiCl und $CaCl_2$ zugesetzt werden.

Die Legierungen können durch Entfernen des Lösemittels, beispielsweise durch Verdampfen, isoliert werden, oder zu Filmen, Fasern oder Membranen in bekannter Weise weiterverarbeitet werden.

Die Erfindung wird durch die folgenden Beispiele verdeutlicht, für die PVP mit $\overline{M}w$ = 50.000 und eine 25gewichtsprozentige Lösung aus Poly-2,2′-(m-phenylen)-5,5′-bibenzimidazol (PBI) mit einem Staudingerindex von 0,7 dl/g, in Dimethylacetamid gelöst, unter Zusatz von 2 Gew.-% LiCl verwendet wurden.

## Beispiele

Vergleichsbeispiel A

5 g PVP ($\overline{M}w$ = 50.000) wurden mit 5 g eines Polyetherimides mit einem Staudingerindex von 0,5 dl/g, gemessen bei 25°C in $CHCl_3$, mit der Formel

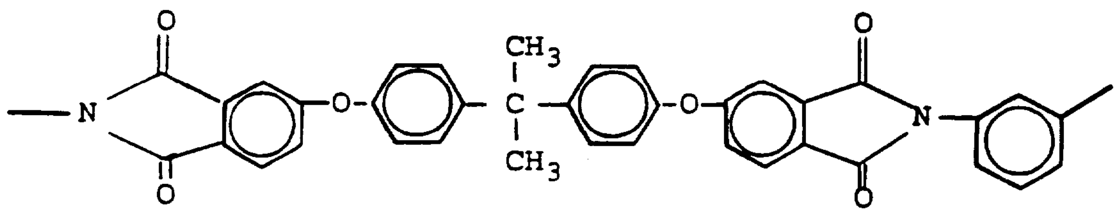

(Tg = 217°C) in 90 g N-Methylpyrrolidon (NMP) gemeinsam gelöst und anschließend durch Verdampfen unter vermindertem Druck das Lösemittel entfernt. Die Legierung zeigte die beiden Glastemperaturen der Ausgangsstoffe von 175°C und 217°C und war demnach nicht homogen gemischt.

**Beispiel 1**

Überprüfung der Mischbarkeit

Es wurden Lösungen von PVP in Dimethylacetamid hergestellt und mit PBI in unterschiedlichen Mengen (vgl. Tab. I) gemischt. Die erhaltenen Mischungslösungen wurden anschließend bei 110°C unter vermindertem Druck bis zur Gewichtskonstanz vom Lösemittel befreit. Die resultierenden PVP-PBI-Legierungen zeigten nach DSC-Messungen jeweils eine einzige Glastemperatur (vgl. Tab. 1).

Tab.I

| Glastemperatur von PBI-PVP-Legierungen | | | | | |
|---|---|---|---|---|---|
| PVP-Gehalt in Gew.-% | 0 | 35 | 50 | 75 | 100 |
| Glastemperatur in °C | 412 | 336 | 312 | 245 | 175 |

**Beispiel 2**

Herstellung von Folien

Es wurden Lösungen aus PBI und PVP gemäß Beispiel 1 hergestellt, die Lösungen entgast und zu Folien gegossen.

Dazu wurden die Mischlösungen mit einer Rakel bei 60°C auf Glasplatten ausgezogen. Die gegossenen Folien wurden anschließend 48 Stunden bei 90°C unter vermindertem Druck vorgetrocknet, darauf für 2 Tage gewässert und schließlich unter vermindertem Druck bei 120°C die Folie bis zur Gewichtskonstanz vom Lösemittel befreit. Die resultierenden Folien waren transparent und zeigten jeweils eine einzige differentialkalorimetrisch nachweisbare Glastemperatur (vgl. Tab. II), die sich nicht von der in der Tab. I angegebenen unterscheidet. Wasser löst also PVP nicht aus den untersuchten Legierungen heraus. Diese Tatsache und die Transparenz der Folien sind ein weiteres Indiz filr die homogene Mischbarkeit von PBI mit PVP.

Tab.II

| Glastemperaturen von PBI-PVP-Legierungsfolien | | |
|---|---|---|
| PVP-Gehalt in Gew.-% | 35 | 50 |
| Glastemperatur in °C | 336 | 312 |

**Beispiel 3**

Messen der Wasseraufnahme

Es wurden Folien gemäß Beispiel 2 hergestellt und deren Wasseraufnahme bei 23°C und 85 % relativer Feuchte gemessen (Tab. III).

Tab.III

| Wasseraufnahme von PBI-PVP-Legierungen | | |
|---|---|---|
| PVP-Gehalt in Gew.-% | 0 | 35 |
| Wasseraufnahme in Gew.-% | 15 | 20 |

**Beispiel 4**

Eine Lösung von 12 g PBI und 8 g PVP (Mw = 50.000) in 80 g N,N-Dimethylacetamid wurde mit einer Rakel auf einer ebenen Glasplatte zu einem Film von 200 µm Dicke ausgezogen und in Wasser bei 20°C koaguliert. Nach einer Wässerungszeit von 1 Tag wurde die Membrane in einer Rührzelle bei 25°C getestet. Folgende Werte wurden gemessen:

1.) Wasserfluß: 238 $l/m^2 \cdot h$ bei 3 bar

2.) Rückhaltevermögen für PVP: 78 % bei 3 bar (als 2prozentige Lösung in $H_2O$)

**Patentansprüche**

**1.** Legierungen mit einer einzigen Glastemperatur, bestehend aus

a.) mindestens einem Homo- oder Copolybenzimidazol mit einem Standinger Index von 0,2 bis 2,5 dl/g, gemessen in N-Methyl-2-pyrrolidon bei 25°C und
b.) 1 bis 99 Gew.% Poly-N-vinylpyrrolidon mit einem Molekulargewicht, angegeben als Gewichtsmittel, im Bereich von 1000 bis 3 Millionen,

**2.** Legierung nach Anspruch 1, dadurch gekennzeichnet, daß die Polybenzimidazole Einheiten der Formel (I) aufweisen

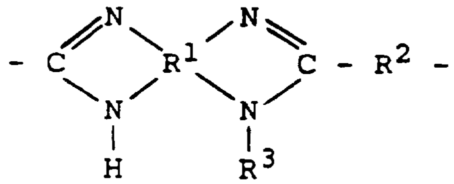

(I),

worin $R^1$ ein vierwertiger aromatischer Ring ist, wobei die Stickstoffatome, die die Benzimidazolringe bilden, paarweise über benachbarte C-Atome des aromatischen Ringes miteinander verbunden sind, $R^2$ einen aromatischen oder heterocyclischer Ring und $R^3$ -H, Phenyl oder $-CH_2CH_2OH$ bedeuten.

**3.** Legierung nach Anspruch 1, dadurch gekennzeichnet, daß die Polybenzimidazole Wiederholeinheiten der Formel (II) aufweisen

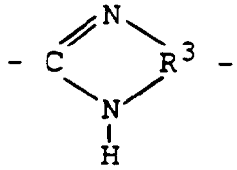

(II),

worin $R^3$ ein aromatischer Ring ist, wobei die Stickstoffatome, die den Benzimidazolring bilden, paarweise über

benachbarte C-Atome des aromatischen Rings miteinander verbunden sind.

**4.** Legierung nach Anspruch 2, dadurch gekennzeichnet, daß

$R^1$ in Formel (I)

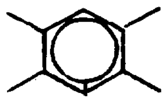

(III),

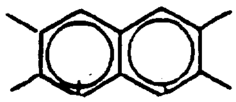

(IV),

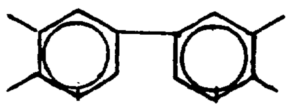

(V)

oder

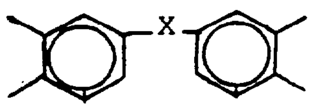

(VI)

ist
worin
-X- -O-, -S-, $-SO_2-$, $-CH_2-$, $-C(CH_3)_2-$, $-C(CF_3)_2-$ oder $-C_2H_2-$,
und daß
$R^2$ in Formel (I)

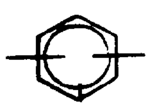

(VII),

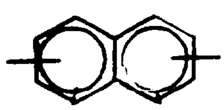

(VIII),

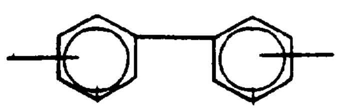

(IX)

oder

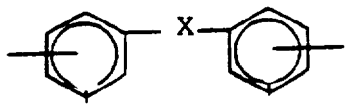

(X),

worin

-X- -O-, -S-, $-SO_2-$, $-CH_2-$, $-C(CH_3)_2-$, $-C(CF_3)_2-$ oder $-C_2H_2-$,

5. Legierung nach Anspruch 1, dadurch gekennzeichnet, daß das Molekulargewicht von Poly-N-vinylpyrrolidon, angegeben als Gewichtsmittel, im Bereich von 20 000 bis 200 000 liegt.

6. Legierung nach Anspruch 1, dadurch gekennzeichnet, daß das Poly-N-vinylpyrrolidon in Mengen von 10 bis 90 Gew.-%, bezogen auf die Summe der Komponenten, enthalten ist.

7. Verfahren zur Herstellung einer Legierung mit einer einzigen Glastemperatur nach Anspruch 1, dadurch gekennzeichnet, daß Poly-N-vinylpyrrolidon, gelöst oder als Substanz, einer Lösung eines Polybenzimidazols zugesetzt und anschließend das Lösemittel entfernt wird.

8. Verfahren zur Herstellung einer Legierung mit einer einzigen Glastemperatur nach Anspruch 1, dadurch gekennzeichnet, daß das Polybenzimidazol in Gegenwart von Poly-N-vinylpyrrolidon synthetisiert wird.

9. Verwendung einer Legierung nach Anspruch 1 zur Herstellung von Formkörpern, Folien, Membranen, Beschichtungen oder Fasern.

## Claims

1. An alloy with a single glass transition temperature comprising

   a.) at least one homo- or copolybenzimidazole having a limiting viscosity number of 0.2 to 2.5 dl/g, measured in N-methyl-2-pyrrolidone at 25°C, and
   b.) 1 to 99 % by weight of poly-N-vinylpyrrolidone having a molecular weight, stated as the weight-average, in the range from 1000 to 3 million.

2. An alloy as claimed in Claim 1, in which the polybenzimidazole units have the formula (I)

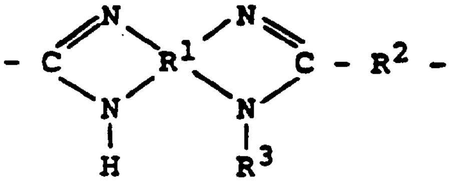

(I),

in which $R^1$ is a quadrivalent aromatic ring, where the nitrogen atoms which form the benzimidazole rings are bonded to one another in pairs via adjacent carbon atoms of the aromatic ring, $R^2$ is an aromatic or heterocyclic ring and $R^3$ is -H, phenyl or $-CH_2CH_2OH$.

3. An alloy as claimed in Claim 1, in which the polybenzimidazoles contain recurring units of the formula (II)

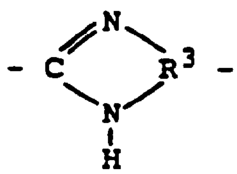

(II),

in which $R^3$ is an aromatic ring, where the nitrogen atoms which form the benzimidazole ring are bonded to one another in pairs via adjacent C atoms of the aromatic ring.

**4.** An alloy as claimed in Claim 2, in which $R^1$ in formula (I) is

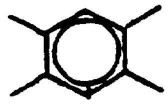

(III),

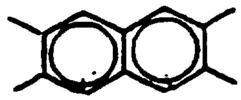

(IV),

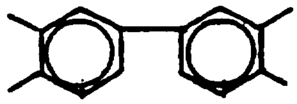

(V)

or

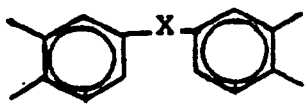

(VI)

in which -X- is -O-, -S-, $-SO_2-$, $-CH_2-$, $-C(CH_3)_2-$, $-C(CF_3)_2-$ or - $C_2H_2-$, and in which $R^2$ in formula (I) is

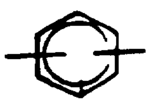

(VII),

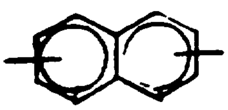

(VIII),

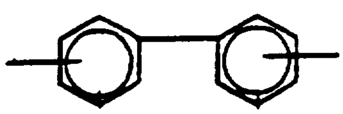

(IX)

or

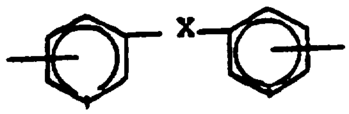

(X),

in which -X- is -O-, -S-, $-SO_2-$, $-CH_2-$, $-C(CH_3)_2-$, $-C(CF_3)_2-$ or $-C_2H_2-$.

5. An alloy as claimed in Claim 1, in which the molecular weight of the poly-N-vinylpyrrolidone, stated as the weight-average, is in the range from 20,000 to 200,000.

6. An alloy as claimed in Claim 1, which comprises the poly-N-vinylpyrrolidone in amounts of 10 to 90 % by weight, based on the sum of the components.

7. A process for the preparation of an alloy with a single glass transition temperature as claimed in Claim 1, which comprises adding a solution of a polybenzimidazole to poly-N-vinylpyrrolidone, in dissolved form or in bulk, and then removing the solvent.

8. A process for the preparation of an alloy with a single glass transition temperature as claimed in Claim 1, which comprises synthesizing the polybenzimidazole in the presence of poly-N-vinylpyrrolidone.

9. The use of an alloy as claimed in Claim 1 for the production of shaped articles, films, membranes, coatings or fibres.

**Revendications**

1. Alliages ayant une seule température de transition vitreuse, constitués par

   a) au moins un homo- ou copolybenzimidazole ayant une viscosité intrinsèque de 0,2 à 2,5 dl/g, mesurée dans de la N-méthyl-2-pyrrolidone à 25°C, et
   b) 1 à 99 % en masse d'une poly(N-vinylpynolidone) ayant une masse moléculaire, indiquée en moyenne en poids, comprise entre 1000 et 3 000 000.

2. Alliage selon la revendication 1, caractérisé en ce que les polybenzimidazoles ont des unités constitutives de formule (I)

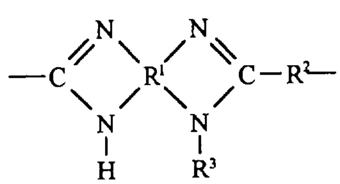

(I),

dans laquelle $R^1$ représente un noyau aromatique tétravalent, les atomes d'azote qui forment les noyaux benzimidazole étant reliés entre eux deux à deux par l'intermédiaire d'atomes de carbone adjacents du noyau aromatique, $R^2$ représente un noyau aromatique ou hétérocyclique, et $R^3$ est -H ou un reste phényle ou - $CH_2CH_2H$.

3. Alliage selon la revendication 1, caractérisé en ce que les polybenzimidazoles ont des unités constitutives de formule (II)

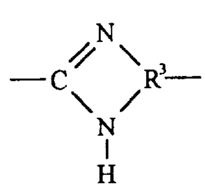

(II),

dans laquelle $R^3$ représente un reste aromatique, les atomes d'azote qui forment les noyaux benzimidazole étant reliés entre eux deux à deux par l'intermédiaire d'atomes de carbone adjacents du reste aromatique.

4. Alliage selon la revendication 2, caractérisé en ce que $R^1$ dans la formule (I) est

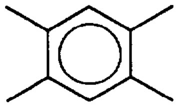

(III),

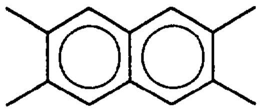

(IV),

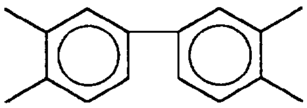

(V)

ou

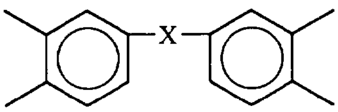

(VI)

où X est -O-, -S-, $-SO_2-$, $-CH_2-$, $-C(CH_3)_2-$, $-C(CF_3)_2-$ ou $-C_2H_2-$, et en ce que $R^2$ dans la formule (I) est

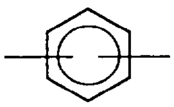

(VII),

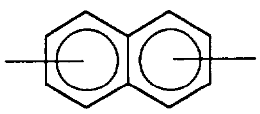

(VIII),

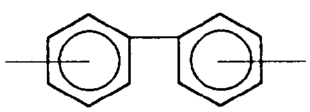

(IX)

ou

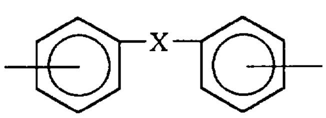

(X)

où X est -O-, -S-, $-SO_2-$, $-CH_2-$, $-C(CH_3)_2-$, $-C(CF_3)_2-$ ou $-C_2H_2-$.

5. Alliage selon la revendication 1, caractérisé en ce que la masse moléculaire de la poly(N-vinylpyrrolidone), indiquée en moyenne en poids, est comprise entre 20 000 et 200 000.

6. Alliage selon la revendication 1, caractérisé en ce qu'il contient la poly(N-vinylpyrrolidone) en une quantité de 10 à 90 % en masse par rapport à la somme des constituants.

7. Procédé de préparation d'un alliage ayant une seule température de transition vitreuse selon la revendication 1,

caractérisé en ce que l'on ajoute une poly(N-vinylpyrrolidone), en solution ou telle quelle, à une solution d'un polybenzimidazole, puis on élimine le solvant.

8. Procédé de préparation d'un alliage ayant une seule température de transition vitreuse selon la revendication 1, caractérisé en ce que l'on synthétise le polybenzimidazole en présence d'une poly(N-vinylpyrrolidone).

9. Utilisation d'un alliage selon la revendication 1 pour la production de corps moulés, de feuilles, de membranes, de revêtements ou de fibres.